# EUROPÄISCHE PATENTSCHRIFT

(11) **EP 2 624 082 B1**
(45) Veröffentlichungstag und Bekanntmachung des Hinweises auf die Patenterteilung: **19.03.2014**
(21) Anmeldenummer: 12000602.8
(22) Anmeldetag: 31.01.2012
(51) Int. Cl.: G05B 19/042, G06F 1/18

(54) **Mobiler Datenspeicher**
Mobile data storage
Mémoire de données mobile

(43) Veröffentlichungstag der Anmeldung: 07.08.2013
(73) Patentinhaber: SICK AG, 79183 Waldkirch (DE)
(72) Erfinder: Merbreier, Bernd, 79114 Freiburg (DE); Kury, Bernhard, 79215 Biederbach (DE)
(74) Vertreter: Manitz, Finsterwald & Partner GbR

(56) Entgegenhaltungen:
- DE-A1- 10 344 263
- US-A1- 2005 070 157

## Beschreibung

Die vorliegende Erfindung betrifft einen mobilen Datenspeicher mit einer Speichereinrichtung, wobei der mobile Datenspeicher derart aufgebaut ist, dass er eigensicher in explosionsgefährdeten Bereichen eingesetzt werden kann.

Datenspeicher dieser Art sind grundsätzlich bekannt und werden insbesondere in explosionsgefährdeten Bereichen eingesetzt. Eigensicher bedeutet dabei, dass die in dem Datenspeicher in dem explosionsgefährdeten Bereich verwendeten Ströme und Spannungen nicht genügend Energie bereitstellen, um eine Explosion auszulösen.

Datenspeicher bekannter Art werden unter anderem dafür verwendet, Daten zwischen Datenverarbeitungsanlagen (z.B. PCs) außerhalb des explosionsgefährdeten Bereichs und Geräten (z.B. Sensoren) in einem explosionsgefährdeten Bereich auszutauschen. Auf diese Weise können zum Beispiel Konfigurationsdaten zu dem Gerät transportiert werden und Messdaten von dem Gerät zu einem Auswertesystem übertragen werden, ohne dass eine direkte Datenverbindung mit dem explosionsgefährdeten Bereich notwendig ist.

Bei bekannten Datenspeichern wird eine Schnittstelle zum Lesen und Schreiben der Daten in dem Datenspeicher verwendet. Diese Schnittstelle muss sowohl mit der Datenverarbeitungsanlage als auch mit dem Gerät kommunizieren können. Dabei werden folgende bekannte Lösungen realisiert:

Zum einen kann eine standardisierte Schnittstelle (z.B. USB - Universal Serial Bus) verwendet werden, die für Datenverarbeitungsanlagen gebräuchlich ist. In diesem Fall muss das Gerät ebenfalls eine standardisierte (USB)-Schnittstelle aufweisen. Dazu ist das USB-Protokoll aufwändig zu implementieren, wodurch umfangreiche Tests zur Sicherstellung der funktionalen Sicherheit und zur Zertifizierung für explosionsgefährdete Bereiche notwendig sind.

Zum anderen kann eine einfache, beispielsweise eine proprietäre, Schnittstelle verwendet werden, die dann allerdings für den Anschluss des Datenspeichers an einen PC einen speziellen Umsetzer notwendig macht. Ein solcher Datenspeicher mit proprietärer Schnittstelle zum Anschluss an einen Umsetzer zur Weiterleitung der Daten an einen PC ist beispielsweise in der DE 103 44 263 A1 offenbart.

Bei beiden Lösungen müssen alle Komponenten des Datenspeichers jedoch eigensicher ausgeführt werden.

Als weiterer Stand der Technik wird auf die US 2005/0070157 verwiesen. Der Erfindung liegt die Aufgabe zu Grunde, einen mobilen Datenspeicher zum Datenaustausch mit Geräten in explosionsgefährdeten Bereichen bereitzustellen, der hohe funktionale Sicherheit gewährleistet und dennoch einfach aufgebaut ist.

Die Aufgabe wird durch einen mobilen Datenspeicher mit den Merkmalen des Anspruchs 1 beziehungsweise durch ein System mit den Merkmalen des Anspruchs 8 gelöst. Insbesondere weist der erfindungsgemäße Datenspeicher eine erste und eine zweite Schnittstelle zum Datenaustausch auf, wobei die zweite Schnittstelle eigensicher und zum Datenaustausch mit einem Gerät, insbesondere einem Sensor, ausgeführt ist und die erste Schnittstelle zum Datenaustausch mit einer Datenverarbeitungsanlage, insbesondere zur Datenauswertung, ausgeführt ist.

Vorteilhafte Ausführungsformen der Erfindung sind in der Beschreibung, den Zeichnungen, sowie den Unteransprüchen beschrieben.

Gemäß einer ersten vorteilhaften Ausführungsform sind die zwei Schnittstellen für unterschiedliche Datenaustauschstandards ausgelegt. Auf diese Weise kann sowohl für die Datenverarbeitungsanlage als auch für das Gerät jeweils eine passende Schnittstelle zur Verfügung gestellt werden. Beispielsweise kann die erste Schnittstelle als USB-Schnittstelle für den Datenaustausch mit einem PC ausgeführt sein, wohingegen die zweite Schnittstelle als SPI-Schnittstelle (Serial Peripheral Interface) für den Datenaustausch mit dem Gerät in einem explosionsgefährdeten Bereich ausgebildet sein kann.

Auf diese Weise ist ohne zusätzliche Hardware sowohl die Verbindung mit der Datenverarbeitungsanlage als auch mit dem Gerät möglich. Auf der Seite der Datenverarbeitungsanlage kann somit ein standardisiertes und üblicherweise auf PCs verfügbares Schnittstellenprotokoll verwendet werden, das aufgrund der Verwendung in einer Büroumgebung keine spezielle Zertifizierung benötigt, wohingegen auf der Geräteseite ein einfach zu implementierendes Protokoll zum Datenaustausch mit dem Datenspeicher implementiert werden kann, das somit außerdem keinen hohen Aufwand für die Zertifizierung und den Nachweis der funktionalen Sicherheit nach sich zieht.

Gemäß einer weiteren vorteilhaften Ausführungsform ist die erste Schnittstelle so angeordnet, dass sie nicht zugänglich ist, wenn die zweite Schnittstelle verwendet wird. Der Datenspeicher kann also so ausgeführt sein, dass zum Beispiel die USB-Schnittstelle mechanisch und/oder elektrisch nicht zugänglich ist, wenn der Datenspeicher über die SPI-Schnittstelle mit dem Gerät verbunden ist. Da somit bei Verwendung der zweiten Schnittstelle ohnehin die erste Schnittstelle nicht verwendet werden kann, ist es nicht notwendig, die erste Schnittstelle bei der Verwendung in explosionsgefährdeten Bereichen zu aktivieren.

Gemäß einer weiteren vorteilhaften Ausführungsform ist die zweite Schnittstelle so ausgeführt, dass durch sie an die Speichereinrichtung übertragene Daten ohne die Verwendung eines Dateisystems in der Speichereinrichtung gespeichert werden. Durch den Verzicht auf ein Dateisystem können Daten durch die zweite Schnittstelle direkt in die Speichereinrichtung geschrieben werden.

Somit ist die Implementierung der zweiten Schnittstelle weniger aufwendig, da die Erfordernisse des Dateisystems nicht berücksichtigt werden müssen. So müssen insbesondere keine Meta-Daten in die Speichereinrichtung geschrieben werden, die zum Beispiel eine Liste der vorhandenen Dateien mit deren Größe und Erstellungsdatum sowie eventuelle Lese- und Schreibrechte etc. enthalten. Daten des Geräts können so beispielsweise als kontinuierlicher Strom in der Speichereinrichtung gespeichert werden.

Alternativ kann auch ein einfaches proprietäres Dateisystem verwendet werden, das zum Beispiel nur den Beginn neuer Dateien innerhalb des kontinuierlichen Stroms anzeigt. Eine solche Implementierung ist deutlich schneller zu realisieren als die Implementierung eines Dateisystems, das üblicherweise bei PCs verwendet wird (z.B. FAT, FAT32 oder NTFS).

Gemäß einer weiteren vorteilhaften Ausführungsform umfasst die erste Schnittstelle eine Kontrolleinheit, die eine Umsetzung der ohne Verwendung eines Dateisystems in der Speichereinrichtung gespeicherten Daten in ein Dateisystem vornimmt. Die Kontrolleinheit kann bei einem Anschluss des Datenspeichers an eine Datenverarbeitungsanlage also ein Dateisystem emulieren, welches zur Datenübertragung von dem Datenspeicher an die Datenverarbeitungsanlage gegebenenfalls notwendig ist. Wurden z.B. die Daten wie oben beschrieben als kontinuierlicher Strom in der Speichereinrichtung gespeichert, so zeigt die Kontrolleinheit der Datenverarbeitungsanlage z.B. eine einzelne Datei an, wohingegen bei der Verwendung eines proprietären Dateisystems die Kontrolleinheit der Datenverarbeitungsanlage auch mehrere Dateien oder Verzeichnisse anzeigen kann. Das emulierte Dateisystem kann ein beliebiges bekanntes Dateisystem (z.B. FAT, FAT32, NTFS, ext3 oder HFS) sein, das mit der Datenverarbeitungsanlage kompatibel ist.

Gemäß einer weiteren vorteilhaften Ausführungsform ist die Kontrolleinheit abgeschaltet, wenn die zweite Schnittstelle des Datenspeichers verwendet wird. Wie voranstehend ausgeführt, kann die erste Schnittstelle derart angeordnet und/oder ausgestaltet sein, dass sie nicht zugänglich ist, wenn die zweite Schnittstelle verwendet wird. Somit kann die mit der ersten Schnittstelle verbundene Kontrolleinheit abgeschaltet werden. Sie ist dann beim Einsatz des mobilen Datenspeichers in explosionsgefährdeten Bereichen nicht aktiv.

Gemäß einer weiteren vorteilhaften Ausführungsform sind die erste und die zweite Schnittstelle galvanisch voneinander getrennt. Diese Maßnahme erhöht die Sicherheit bei Verwendung in explosionsgefährdeten Bereichen, da eine eventuell nicht eigensichere erste Schnittstelle dann nicht nur abgeschaltet ist, sondern keinerlei elektrische Verbindung mit der im explosionsgefährdeten Bereich aktiven zweiten Schnittstelle aufweist.

Die Erfindung bezieht sich weiterhin auf ein Sensorsystem mit einem erfindungsgemäßen Datenspeicher, einem Sensor mit einer Schnittstelle zur Kommunikation mit der zweiten Schnittstelle des Datenspeichers und einem Auswertesystem in Form einer Datenverarbeitungsanlage, wobei die Datenverarbeitungsanlage eine Kommunikation mit der ersten Schnittstelle des Datenspeichers ermöglicht.

Der Sensor des Sensorsystems kann dabei in einem explosionsgefährdeten Bereich angeordnet sein, wobei ein Datenaustausch mit dem Sensor mittels der zweiten Schnittstelle des Datenspeichers erfolgt. Nach dem Datenaustausch kann der Datenspeicher aus dem explosionsgefährdeten Bereich entfernt und an eine Datenverarbeitungsanlage angeschlossen werden, die mittels der ersten Schnittstelle mit dem Datenspeicher kommuniziert. Die so übertragenen Daten können mit einem Auswertesystem, das eine Schnittstelle zur Datenverarbeitungsanlage aufweist, ausgewertet werden.

Mit dem erfindungsgemäßen mobilen Datenspeicher und dem erfindungsgemäßen Sensorsystem ist insbesondere auch der Aufwand für die Zertifizierung für SIL- (Sicherheits-Integritätslevel) Applikationen deutlich geringer.

Nachfolgend wird die Erfindung rein beispielhaft anhand möglicher Ausführungsformen unter Bezugnahme auf die beigefügten Zeichnungen beschrieben. Es zeigen in schematischer Darstellung:
- Fig. 1: einen erfindungsgemäßen mobilen Datenspeicher;
- Fig. 2: einen erfindungsgemäßen mobilen Datenspeicher, der eine galvanische Trennung einer ersten und einer zweiten Schnittstelle aufweist.

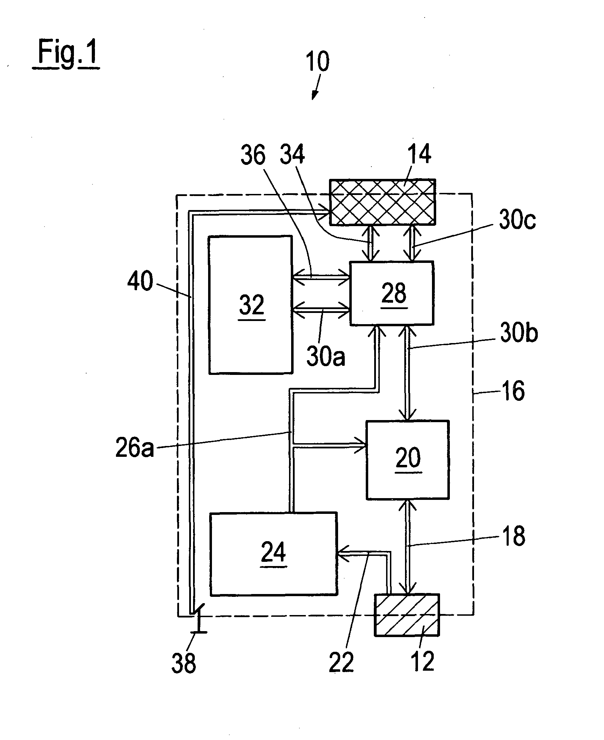

In Figur 1 ist ein Datenspeicher 10 dargestellt, der eine erste Schnittstelle 12 sowie eine zweite Schnittstelle 14 aufweist. Die erste Schnittstelle 12 ist als USB-Schnittstelle ausgeführt und derart in einem Gehäuse 16 angeordnet, dass diese nicht zugänglich ist, wenn die als SPI-Schnittstelle ausgeführte zweite Schnittstelle 14 verwendet wird.

Die erste Schnittstelle 12 ist mittels einer USB-Verbindung mit einer Kontrolleinheit, die als Prozessor 20 (CPU) ausgeführt ist, verbunden. Die erste Schnittstelle 12 ist weiterhin über eine USB-Versorgungsleitung 22 mit einer Stromversorgungseinrichtung 24 verbunden, die mittels einer Versorgungsleitung 26a den Prozessor 20 und einen Umschalter 28 mit einer Betriebsspannung von 3,3 Volt versorgt. Der Umschalter 28 ermöglicht mittels SPI-Verbindungen 30 eine Datenverbindung einer Speichereinrichtung 32 mit dem Prozessor 20 oder der zweiten Schnittstelle 14.

Der Umschalter 28 kann alternativ auch über die SPI-Versorgung 34 mit Betriebsspannung versorgt werden. Die Speichereinrichtung 32 wird wiederum von dem Umschalter 28 über eine Betriebsspannungsversorgung 36 versorgt.

Durch einen Schalter 38 und eine Signalleitung 40 werden Signale an eine angeschlossene zweite Schnittstelle 14 übermittelt, wobei die Signale zur Auslösung von bestimmten Ereignissen in dem Gerät, wie zum Beispiel dem Starten einer Messung oder der Datenübertragung, dienen.

Im Betrieb wird der Datenspeicher 10 mittels der zweiten Schnittstelle 14 mit einem Gerät bzw. einem Sensor verbunden. Durch die Verbindung werden der Umschalter 28 sowie die Speichereinrichtung 32 über die SPI-Versorgung 34 und die Betriebsspannungsversorgung 36 mit Strom versorgt und somit aktiviert. Der Prozessor 20 und die Stromversorgungseinrichtung 24 sind nicht aktiv. Da die Kopplung des Datenspeichers 10 mit dem Sensor in einer explosionsgefährdeten Umgebung erfolgt, muss der zu der ersten Schnittstelle 12 zugehörige Prozessor 20 und die Stromversorgungseinrichtung 24 abgeschaltet bleiben.

Nach dem Verbinden des Datenspeichers 10 mit dem Sensor erfolgt der Datenaustausch des Sensors mit der Speichereinrichtung 32 über die SPI-Verbindungen 30a und 30c, den Umschalter 28 und die zweite Schnittstelle 14.

Innerhalb des explosionsgefährdeten Bereichs können also die zweite Schnittstelle 14, der Umschalter 28 sowie die Speichereinrichtung 32 aktiv sein. Diese Komponenten des Datenspeichers 10, sowie die zugehörigen Versorgungs- und Datenleitungen 30, 34, 36 müssen folglich eigensicher ausgelegt sein.

Nach Abschluss der Datenübertragung wird der Datenspeicher 10 aus dem explosionsgefährdeten Bereich entfernt und mit der ersten Schnittstelle 12 mit einer Datenverarbeitungseinrichtung (z.B. einem externen PC) verbunden. Die Verbindung erfolgt über eine USB-Schnittstelle des PCs, die eine integrierte Stromversorgung aufweist, über die die Stromversorgungseinrichtung 24 mittels der USB-Versorgungsleitung 22 aktiviert wird. Die Stromversorgungseinrichtung 24 versorgt nun über die Versorgungsleitung 26a den Prozessor 20 und den Umschalter 28 und über diesen indirekt die Speichereinrichtung 32. Somit kann ein Datenaustausch zwischen dem PC und der Speichereinrichtung 32 über die SPI-Verbindung 30a, den Umschalter 28, eine weitere SPI-Verbindung 30b, den Prozessor 20, die USB-Verbindung 18 und die erste Schnittstelle 12 erfolgen. Der Prozessor 20 setzt dabei die über die SPI-Verbindung 30b erhaltenen Daten derart für die Übertragung über die erste Schnittstelle 12 um, dass ein Dateisystem für den PC emuliert wird. Danach ist der Datenaustausch zwischen dem PC und dem Sensor abgeschlossen.

Alternativ kann auch zuerst der Datenaustausch mit dem PC und anschließend mit dem Sensor erfolgen.

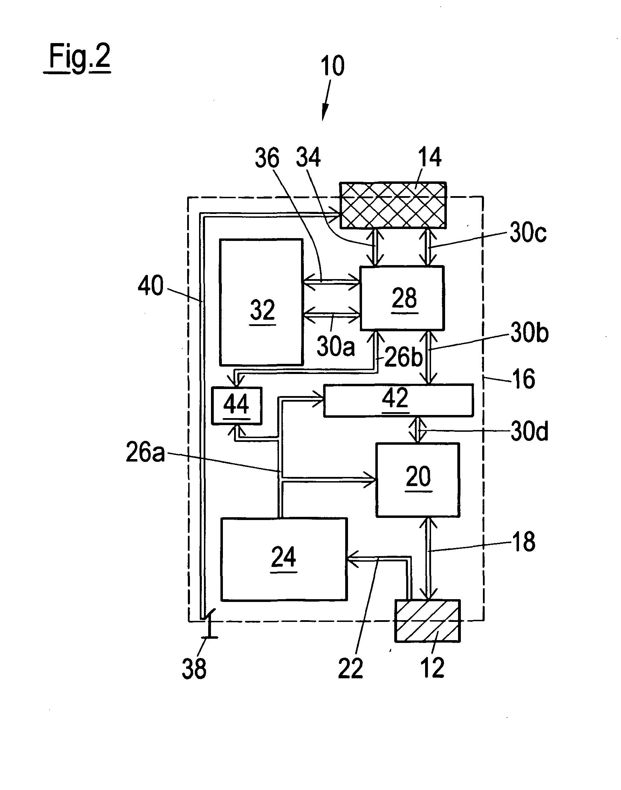

Die in Figur 2 gezeigte Ausführungsform unterscheidet sich von der in Figur 1 gezeigten dadurch, dass die erste Schnittstelle 12 von der zweiten Schnittstelle 14 galvanisch getrennt ist. Dazu wird ein Optokoppler 42 zwischen den Umschalter 28 und den Prozessor 20 geschaltet, der über SPI-Verbindungen 30b und 30d mit dem Umschalter 28 und dem Prozessor 20 verbunden ist. Der Optokoppler 42 weist dazu eine ausreichende Luft- und Kriechstrecke auf und wird über die Versorgungsleitung 26a von der Stromversorgungseinrichtung 24 versorgt. Zur Stromversorgung des Umschalters 28 mittels einer Versorgungsleitung 26b wird ein galvanisch sicher getrennter DC-DC-Wandler 44 zwischengeschaltet. Somit besteht zwischen der ersten Schnittstelle 12 und der zweiten Schnittstelle 14 keine elektrische Verbindung. Es wird damit ausgeschlossen, dass bei einem Betrieb der zweiten Schnittstelle 14 in einem explosionsgefährdeten Bereich unerwünschte Ströme oder Spannungen, die eine Explosion auslösen könnten, an der ersten Schnittstelle 12 anliegen. Die Betriebssicherheit wird auf diese Weise erhöht.

### Bezugszeichenliste

- 10: Datenspeicher
- 12: erste Schnittstelle
- 14: zweite Schnittstelle
- 16: Gehäuse
- 18: USB-Verbindung
- 20: Prozessor
- 22: USB-Versorgungsleitung
- 24: Stromversorgungseinrichtung
- 26a, 26b: Versorgungsleitung
- 28: Umschalter
- 30, 30a, 30b, 30c, 30d: SPI-Verbindung
- 32: Speichereinrichtung
- 34: SPI-Versorgung
- 36: Betriebsspannungsversorgung
- 38: Schalter
- 40: Signalleitung
- 42: Optokoppler
- 44: galvanisch getrennter DC-DC-Wandler

## Patentansprüche

1. Mobiler Datenspeicher (10) mit einer Speichereinrichtung (32), wobei der mobile Datenspeicher derart aufgebaut ist, dass er eigensicher in explosionsgefährdeten Bereichen eingesetzt werden kann,
**dadurch gekennzeichnet, dass**
die Speichereinrichtung (32) eine erste (12) und eine zweite Schnittstelle (14) zum Datenaustausch aufweist, wobei die zweite Schnittstelle (14) eigensicher und zum Datenaustausch mit einem Gerät, insbesondere einem Sensor, ausgeführt ist und die erste Schnittstelle (12) zum Datenaustausch mit einer Datenverarbeitungsanlage, insbesondere zur Datenauswertung, ausgeführt ist.

2. Datenspeicher (10) nach Anspruch 1,
**dadurch gekennzeichnet, dass**
die zwei Schnittstellen (12, 14) für unterschiedliche Datenaustauschstandards ausgelegt sind, insbesondere die erste Schnittstelle (12) für USB (Universal Serial Bus) ausgelegt ist und die zweite Schnittstelle (14) für SPI (Serial Peripheral Interface) ausgelegt ist.

3. Datenspeicher (10) nach Anspruch 1 oder 2,
**dadurch gekennzeichnet, dass**
die erste Schnittstelle (12) so angeordnet ist, dass sie nicht zugänglich ist, wenn die zweite Schnittstelle (14) verwendet wird.

4. Datenspeicher (10) nach zumindest einem der vorstehenden Ansprüche,
**dadurch gekennzeichnet, dass**
die zweite Schnittstelle (14) so ausgeführt ist, dass durch sie an die Speichereinrichtung (32) übertragene Daten ohne die Verwendung eines Dateisystems in der Speichereinrichtung (32) gespeichert werden.

5. Datenspeicher (10) nach Anspruch 4,
**dadurch gekennzeichnet, dass**
die erste Schnittstelle (12) eine Kontrolleinheit (20) umfasst, die eine Umsetzung der ohne Verwendung eines Dateisystems gespeicherten Daten in der Speichereinrichtung (32) in ein Dateisystem vornimmt.

6. Datenspeicher (10) nach Anspruch 5,
**dadurch gekennzeichnet, dass**
die Kontrolleinheit (20) abgeschaltet ist, wenn die zweite Schnittstelle (14) des Datenspeichers (10) verwendet wird.

7. Datenspeicher (10) nach zumindest einem der vorstehenden Ansprüche,
**dadurch gekennzeichnet, dass**
die erste (12) und die zweite Schnittstelle (14) galvanisch voneinander getrennt sind.

8. Sensorsystem mit
einem Datenspeicher (10) nach einem der Ansprüche 1 bis 7,
einem eigensicheren Sensor mit einer Schnittstelle zur Kommunikation mit der zweiten Schnittstelle (14) des Datenspeichers (10), und
einer Datenverarbeitungsanlage, wobei die Datenverarbeitungsanlage eine Kommunikation mit der ersten Schnittstelle (12) des Datenspeichers (10) ermöglicht.

## Claims

1. A mobile data memory (10) having a memory device (32), wherein the mobile data memory is designed such that it can be used in an intrinsically safe manner in explosion-prone areas,
**characterized in that**
the memory device (32) has a first interface (12) and a second interface (14) for data exchange, with the second interface (14) being designed as intrinsically safe and for data exchange with a device, in particular with a sensor, and with the first interface (12) being designed for data exchange with data processing equipment, in particular for data evaluation.

2. A data memory (10) in accordance with claim 1,
**characterized in that**
the two interfaces (12, 14) are configured for different data exchange standards, the first interface (12) in particular being configured for USB (universal serial bus) and the second interface (14) being configured for SPI (serial peripheral interface).

3. A data memory (10) in accordance with claim 1 or claim 2,
**characterized in that**
the first interface (12) is arranged so that it is not accessible when the second interface (14) is being used.

4. A data memory (10) in accordance with at least one of the preceding claims,
**characterized in that**
the second interface (14) is designed so that data transmitted to the memory device (32) by it are stored in the memory device (32) without using a file system.

5. A data memory (10) in accordance with claim 4,
**characterized in that**
the first interface (12) includes a control unit (20) which carries out a conversion into a file system of the data stored in the memory device (32) without using a file system.

6. A data memory (10) in accordance with claim 5,
**characterized in that**
the control unit (20) is switched off when the second interface (14) of the data memory (10) is being used.

7. A data memory (10) in accordance with at least one of the preceding claims,
**characterized in that**
the first interface (12) and the second interface (14) are galvanically separate from one another.

8. A sensor system comprising
a data memory (10) in accordance with any one of the claims 1 to 7;
an intrinsically safe sensor having an interface for communication with the second interface (14) of the data memory (10); and
data processing equipment, wherein the data processing equipment enables a communication with the first interface (12) of the data memory (10).

## Revendications

1. Mémoire de données mobile (10) comprenant un système à mémoire (32), dans lequel la mémoire de données mobile est constituée de telle façon qu'elle peut être utilisée avec sécurité intrinsèque dans des régions menacées par des explosions,
**caractérisée en ce que**
le système à mémoire (32) comprend une première interface (12) et une seconde interface (14) pour l'échange de données, la seconde interface (14) étant réalisée avec sécurité intrinsèque et en vue de l'échange de données avec un appareil, en particulier un capteur, et la première interface (12) étant réalisée en vue de l'échange de données avec une installation de traitement de données, en particulier pour l'évaluation de données.

2. Mémoire de données (10) selon la revendication 1,
**caractérisée en ce que** les deux interfaces (12, 14) sont conçues pour des standards d'échange de données différents, en particulier la première interface (12) est conçue pour un standard USB (Universal Serial Bus), et la seconde interface (14) est conçue pour le standard SPI (Serial Peripheral Interface).

3. Mémoire de données (10) selon la revendication 1 ou 2,
**caractérisée en ce que** la première interface (12) est agencée de telle façon qu'elle n'est pas accessible quand la seconde interface (14) est utilisée.

4. Mémoire de données (10) selon l'une au moins des revendications précédentes,
**caractérisée en ce que** la seconde interface (14) est réalisée de telle façon que les données transmises par elle-même au système à mémoire (32) sont mémorisées dans le système à mémoire (32) sans utiliser de système de données.

5. Mémoire de données (10) selon la revendication 4,
**caractérisée en ce que** la première interface (12) inclut une unité de contrôle (20) qui exécute une conversion en un système de données des données mémorisées dans le système à mémoire (32) sans utiliser de système de données.

6. Mémoire de données (10) selon la revendication 5,
**caractérisée en ce que** l'unité de contrôle (20) est mise à l'arrêt quand la seconde interface (14) de la mémoire de données (10) est utilisée.

7. Mémoire de données (10) selon l'une au moins des revendications précédentes,
**caractérisée en ce que** la première interface (12) et la seconde interface (14) sont séparées l'une de l'autre sur le plan galvanique.

8. Système de capteur comprenant
une mémoire de données (10) selon l'une des revendications 1 à 7, un capteur à sécurité intrinsèque avec une interface pour la
communication avec la seconde interface (14) de la mémoire de données (10), et
une installation de traitement de données, telle que l'installation de traitement de données permet une communication avec la première interface (12) de la mémoire de données (10).
